# EUROPÄISCHE PATENTSCHRIFT

(11) **EP 3 222 465 B1**
(45) Veröffentlichungstag und Bekanntmachung des Hinweises auf die Patenterteilung: **02.01.2019**
(21) Anmeldenummer: 17151566.1
(22) Anmeldetag: 16.01.2017
(51) Int. Cl.: B60P 3/16, B62D 21/11, B62D 21/12, B62D 21/18, B28C 5/42

(54) **PUMPENTRÄGER FÜR EINE HYDRAULIKPUMPE ZUM ANTRIEB DER MISCHTROMMEL EINES FAHRMISCHERS**
PUMP SUPPORT FOR A HYDRAULIC PUMP FOR DRIVING THE MIXING DRUM OF A CONCRETE MIXER
SUPPORT DE POMPE HYDRAULIQUE DESTINÉ À ENTRAÎNER LE TAMBOUR MÉLANGEUR D'UNE BÉTONNIÈRE PORTÉE

(30) Priorität: 21.03.2016 DE 102016003482
(43) Veröffentlichungstag der Anmeldung: 27.09.2017
(73) Patentinhaber: Liebherr-Mischtechnik GmbH, 88427 Bad Schussenried (DE)
(72) Erfinder: Ruf, Berthold, 88477 Schwendi-Schönebürg (DE); Pifko, Alexander, 88250 Weingarten (DE)
(74) Vertreter: Laufhütte, Dieter

(56) Entgegenhaltungen:
- EP-A1- 0 490 365
- EP-A2- 1 982 811
- CN-Y- 2 871 299
- CN-Y- 201 275 802
- DE-A1-102013 006 393
- US-A- 4 575 254

## Beschreibung

Die Erfindung betrifft einen Pumpenträger für wenigstens eine Hydraulikpumpe zum Antrieb der Mischtrommel eines Fahrmischers, einen derartigen Fahrmischer sowie ein Einbauverfahren einer Hydraulikpumpe mittels des Pumpenträgers.

Im Regelfall wird die Hydraulikpumpe des Fahrmischerantriebs über eine Gelenkwelle mit einem Nebenabtrieb des Fahrzeugmotors verbunden. Üblicherweise werden hierfür mehrere Kreuzgelenkwellen verwendet, da diese kostengünstig sind und größere Einbauwinkel als z.B. Gleichlaufgelenkwellen erlauben.

Wird ein einfaches Kreuzgelenk in gebeugtem Zustand gleichförmig an der Antriebsseite gedreht, führt dies zu einer ungleichförmigen Bewegung an der Abtriebsseite. Diese Ungleichförmigkeit wird durch ein zweites Kreuzgelenk der Gelenkwelle wieder ausgeglichen, sofern die Beugewinkel an beiden Gelenken gleich sind. Die Gelenkanordnung kann wahlweise in W- oder Z-Anordnung erfolgen. Beim Fahrmischer wird überwiegend die W-Anordnung verwendet, da durch den begrenzten Bauraum eine Z-Anordnung meist nicht möglich ist.

Beim Einbau der Gelenkwelle am Fahrmischer ist es deshalb sehr wichtig, dass die Gelenkwinkel gleich sind, da ansonsten durch die beschriebene Ungleichförmigkeit Drehschwingungen im Antriebsstrang auftreten. Durch diese können der Nebenabtrieb des Fahrzeugs, die Hydraulikpumpe des Mischerantriebs und auch die Gelenkwelle selbst beschädigt werden.

Vor allem bei der W-Anordnung ist das korrekte Ausrichten ohne spezielle Hilfsmittel kaum möglich. Üblicherweise verwendet man hier eine Einbaulehre mit fester Länge und angeschweißten Flanschflächen, welche am Nebenabtrieb fixiert wird. An diese wird die Pumpe ausgerichtet und danach am Mischeraufbau fixiert. Danach wird die Einbaulehre wieder herausgenommen und durch die Gelenkwelle ersetzt.

Die Hydraulikpumpe ist üblicherweise in einen Pumpenträger verschraubt, der auf dem Hilfsrahmen des Fahrmischers befestigt wird. Beim Ausrichten mit Einbaulehre muss die Pumpe frei handhabbar sein, um sie spaltfrei an die Einbaulehre ansetzen zu können. Da die Antriebspumpen für einen Fahrmischer bis zu 100kg wiegen können erfordert dies spezielle Anschlagmittel. Zudem ist die Handhabung der schweren Pumpe mit angebautem Pumpenträger im begrenzten Bauraum zwischen Fahrmischeraufbau und Führerhaus des LKW schwierig.

Der Anbau des Pumpenträgers richtet sich nur nach der Position der Pumpe, daher müssen nach dem Positionieren der Pumpe die Halteteile des Pumpenträgers passend zu der gegebenen Position eingestellt und am Mischerhilfsrahmen befestigt werden. Dazu sind entweder große und aufwändige Bauteile mit Einstellmöglichkeit (z.B. Langlöcher) erforderlich oder die Halteteile müssen nachträglich an den Anbau angepasst werden (z.B. durch Schweißen). Bei Teilen, die im Montageprozess geschweißt werden, ist für das anschließende Lackieren ein hoher Zusatzaufwand notwendig.

Üblicherweise sind die Rahmen von LKW-Fahrgestelle im vorderen Bereich torsionsweich, was das Fahr- und Lenkverhalten positiv beeinflusst. Als Folge dieses torsionsweichen Aufbaus kommt es aber zu Relativbewegungen zwischen den Trägern des Mischerhilfsrahmens und speziell bei angeschweißten Pumpenträgern häufig zu Rissen. Die EP0490365 zeigt als nächster Stand der Technik einen Pumpenträger mit einer Schiebevorrichtung.

Gesucht wird daher nach einem alternativen Pumpenträger und Einbauverfahren, um die vorgenannte Problematik zu umgehen.

Diese Aufgabe wird durch einen Pumpenträger eines Fahrmischers gemäß den Merkmalen des Anspruchs 1 gelöst. Demnach wird ein neuartiger Pumpenträger vorgeschlagen, der wenigstens ein Profil umfasst, dessen erstes Ende mittels lösbarem Festlager an einem Grundrahmen und dessen zweites Ende über ein Loslager auf dem Grundrahmen gelagert ist. Der Grundrahmen kann entweder Bestandteil des Pumpenträgers sein oder ein bereits verbautes Bauteil des Fahrmischers darstellen. Maßgeblich ist jedoch die Lagerung des Profils am genutzten Grundrahmen. Zudem ist im Bereich des Festlagers wenigstens ein Stellmittel vorgesehen, um das Profil bei gelöstem Festlager gegenüber dem Grundlager um das Loslager bewegen zu können, insbesondere zu verschwenken.

Das Stellmittel kann beispielsweise eine Stellschraube oder ein sonstig geeignetes Mittel sein. Idealerweise ist das Stellmittel am Grundträger angeordnet und wirkt mit einem entsprechenden Anschlag des Profils zusammen.

Der Kerngedanke der vorliegenden Erfindung besteht darin, dass die Pumpe zunächst mittels Pumpenträger in das Fahrzeug eingebaut und anschließend mittels dem Stellmittel feinjustiert werden kann, um die entsprechende Anordnung mit Gelenkwelle auszurichten. Es kann demnach auf eine aus dem Stand der Technik bekannte Einbaulehre verzichtet werden. Die Feinjustierung erfolgt ausschließlich mittels des neuartigen Pumpenträgers.

Denkbar ist es, dass die wenigstens eine Hydraulikpumpe an dem Profil befestigt wird. Die Montage kann an dem Profil mittelbar oder unmittelbar erfolgen. Besonders bevorzugt ist eine Montage über wenigstens eine Konsole, die die Hydraulikpumpe aufnimmt und an dem Profil befestigbar ist. Denkbar ist eine Ausführung des Profils als Rohr, das quer zur Fahrtrichtung am Grundrahmen montiert ist.

Das Festlager kann eine Flanschplatte umfassen, die sich nach entsprechender Ausrichtung mit dem Grundrahmen des Pumpenträgers bzw. des Fahrmischers fest verbinden lässt, insbesondere fest verschraubbar ist. Eine Festlegung des Festlegers kann auch mit einer beliebigen sonstigen Komponente des Fahrmischers erfolgen.

Weiterhin ist es vorteilhaft, wenn die Flanschplatte des Festlagers wenigstens ein Spannstiftloch aufweist, um zu Demontagezwecken den Pumpenträger mittels Spannstift provisorisch gegenüber dem Fahrmischer bzw. dem Grundrahmen festzulegen bzw. zu fixieren. Dadurch kann der Ausbau sowie der erneute Einbau des Pumpenträgers bzw. der Hydraulikpumpe deutlich vereinfacht werden, da das Spannstiftloch ein Maß für die erforderliche Einbauposition darstellt.

Nach dem Ausrichten der Pumpe ist es zweckmäßig, das Loslager über einen entsprechenden Sicherungsstift zu sichern, insbesondere ist ein Rundstahlbügel vorgesehen, der eine nachträgliche Sicherung des Loslagers erlaubt.

Neben dem erfindungsgemäßen Pumpenträger betrifft die Erfindung ebenfalls einen Fahrmischer mit einem Mischeraufbau und wenigstens einer Hydraulikpumpe zum Antrieb der Mischertrommel. Erfindungsgemäß ist die Hydraulikpumpe mittels des erfindungsgemäßen Pumpenträgers, wie er bereits voranstehend ausführlich diskutiert wurde, montiert. Der Fahrmischer zeichnet sich demnach durch dieselben Vorteile und Eigenschaften aus, wie sie bereits anhand des Pumpenträgers beschrieben wurden. Eine wiederholende Beschreibung wird daher als nicht notwendig erachtet.

Der genannte Grundrahmen des Pumpenträgers kann vorteilhafter Weise der Trommellagerbock des Mischeraufbaus sein, folglich wird das Profil des Pumpenträgers unmittelbar am Trommellagerbock an entsprechenden Lagerstellen aufgenommen. Das Fest- und Loslager wird dadurch sowohl durch das Profil als auch durch den Trommellagerbock gebildet.

Denkbar ist es ebenfalls, dass der Grundrahmen ein separates Bauteil ist, das zusätzlich am Fahrmischer zur Verwendung mit dem Pumpenträger eingebaut werden muss. Der Grundrahmen kann jedoch auch ein sonstig geeignetes Bauteil des Mischeraufbaus bzw. des Fahrmischers sein.

Die Anbindung der Hydraulikpumpe an den Nebenabtrieb des Fahrmischers erfolgt über wenigstens eine Gelenkwelle, vorzugsweise mit endseitig angeordneten Kreuzgelenken.

Neben den bereits vorstehend beschriebenen Vorrichtungen betrifft die vorliegende Erfindung zudem ein Montageverfahren für wenigstens eine Hydraulikpumpe in einem Fahrmischer. Maßgeblich für das erfindungsgemäße Montageverfahren ist es, dass zur Montage der Hydraulikpumpe der erfindungsgemäße Pumpenträger der vorliegenden Erfindung verwendet wird. Eine entsprechende Hydraulikpumpe zum Antrieb der Mischertrommel eines Fahrmischers wird üblicherweise über eine Gelenkwelle mit einem Nebenabtrieb des Fahrmotors des Fahrmischers gekoppelt. Die Gelenkwelle umfasst endseitig jeweils ein Gelenk, insbesondere Kreuzgelenk, um die Gelenkwelle zum einen mit dem Nebenabtrieb und zum anderen mit dem Antrieb der Hydraulikpumpe zu verbinden.

Durch die Verwendung des erfindungsgemäßen Pumpenträgers kann die Hydraulikpumpe durch den Pumpenträger aufgenommen und im Fahrmischer montiert werden. Zunächst ist jedoch das Festlager nicht gegenüber dem Grundrahmen fixiert, sodass über das Stellmittel eine Feinjustierung der Hydraulikpumpe erfolgen kann. Insbesondere wird das Stellmittel solange bewegt, bis die Beugewinkel der verbauten Gelenke identisch sind. Im Anschluss kann das Festlager ordnungsgemäß am Grundrahmen fixiert werden.

Die Ausrichtung der Hydraulikpumpe kann entweder mit oder ohne verbauter Gelenkwelle erfolgen.

Für die Ermittlung der Beugewinkel der verbauten Gelenke bieten sich unterschiedliche Messverfahren an. Gemäß einer ersten Variante kann zunächst zwischen Nebenabtrieb und Hydraulikpumpe eine spezielle Messwelle mit integrierten Sensoren zur Erfassung des Winkels zwischen den Gelenken eingesetzt werden. Diese Messwelle liefert die gewünschten Messwerte, um die Hydraulikpumpe passgenau auszurichten und im Anschluss zu fixieren. Erst im Anschluss wird die Messwelle durch die Gelenkwelle ersetzt.

Gemäß einer alternativen Variante eines Messverfahrens können die Winkel zwischen den Gelenken auch per optischem oder akustischem Messverfahren bestimmt werden. Dazu ist es vorteilhaft, wenn eine Sende- und Empfangseinheit am Montageflansch der Pumpe oder alternativ am Flansch des Nebenabtriebs vorgesehen wird. Ein entsprechender Reflektor am gegenüberliegenden Flansch erlaubt die Reflektion der ausgesendeten Messsignale. Anhand der Signallaufwege und Laufzeiten lassen sich die Beugewinkel der Gelenke hinreichend genau bestimmen, um die Hydraulikpumpe in die gewünschte Einbauposition zu verbringen. Das optische oder akustische Messverfahren kann auf Grundlage von Schall, Laser oder sonstigen geeigneten Wellen erfolgen.

Gemäß einer weiteren Alternative besteht ebenfalls die Möglichkeit, die Messung mit der bereits verbauten Gelenkwelle auszuführen. Dadurch müssen auf der Gelenkwelle geeignete Winkel- und/oder Neigungssensoren vorgehalten werden, um einen Rückschluss auf die Beugewinkel an den Gelenken zu ermöglichen. Denkbar ist es, dass jeweils ein Sensor im Bereich des Montageflansches der Gelenkwelle und wenigstens ein Sensor mittig, das heißt auf halber Strecke zwischen den beiden Gelenken auf der Gelenkwelle vorgesehen ist.

Durch geeignete Messwertauswertung lassen sich die Beugewinkel der einzelnen Gelenke bestimmen. Beispielsweise kann der Beugewinkel am Gelenk des Nebenabtriebs durch Vergleich der Messwerte des am Nebenabtriebsflansch befestigten und des mittig angeordneten Sensors ermittelt werden, während der Beugewinkel am Gelenk der Hydraulikpumpe durch Messwertvergleich des am Flansch des pumpenseitigen Gelenks angeordneten und des mittig angeordneten Sensors bestimmt wird. Das resultierende Messwertergebnis dient dann zur Feinjustierung der Hydraulikpumpe mittels des Stellmittels. Das Verfahren lässt sich auch mit weniger Sensoren ausführen, jedoch muss dafür mehr Zeit eingeplant werden.

Nach dem erfolgreichen Ausrichten der Hydraulikpumpe kann der Pumpenträger durch Verschraubung des Festlagers mit dem Grundrahmen bzw. dem Trommellagerbock des Fahrmischers festgesetzt werden. Im Anschluss kann das Spannstiftloch des Festlagers gebohrt werden, um für eine möglicherweise nachfolgende Demontage bzw. erneute Montage eine provisorische Festlegung des Festlagers mittels Spannstift zu ermöglichen. Zuletzt wird das Loslager mittels des Sicherungsbügels gesichert.

Weitere Vorteile und Einzelheiten der Erfindung werden im Folgenden anhand der in den Zeichnungen gezeigten Ausführungsbeispiele erläutert. Es zeigen:
- Figur 1:: eine Seitenansicht auf den erfindungsgemäßen Fahrmischer,
- Figur 2:: eine perspektivische Darstellung des Pumpenträgers mit verbauter Hydraulikpumpe,
- Figur 3:: eine Detailaufnahme des Profils des Pumpenträgers
- Figur 4:: eine Seitenansicht auf das Profil gemäß Figur 3,
- Figur 5:: eine perspektivische Darstellung des Trommerlagerbockes zur Aufnahme des Profils
- Figur 6:: eine Draufsicht auf den Trommellagerbock gemäß Figur 5
- Figur 7:: eine Seitenansicht des Pumpenantriebsstranges
- Figur 8:: eine Darstellung zur Verdeutlichung des Messverfahrens mit spezieller Messwelle
- Figur 9:: eine Darstellung zur Verdeutlichung des Messverfahrens mit optischen oder akustischen Sensoren,
- Figur 10:: eine Darstellung zur Verdeutlichung des Messverfahrens Sensoren auf der Gelenkwelle und
- Figur 11:: eine zweite Ausführungsform des Pumpenträgers.

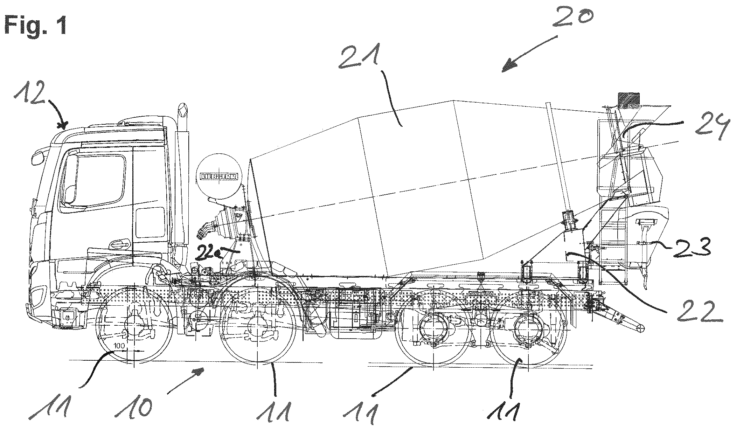

Figur 1 gibt eine Übersicht über den erfindungsgemäßen Fahrmischer, der aus einem LKW-Fahrgestell 10 sowie einem Mischeraufbau 20 besteht. Das LKW-Fahrgestell 10 weist mehrere Fahrachsen 11 sowie eine Fahrerkabine 12 auf. Der Mischeraufbau besteht aus den Trommelböcken 22, die die Mischtrommel 21 drehbar lagern. Weitere Komponenten, wie bspw. die Betonschurre 23 sowie eine Steigleiter 24 sind ebenfalls ersichtlich.

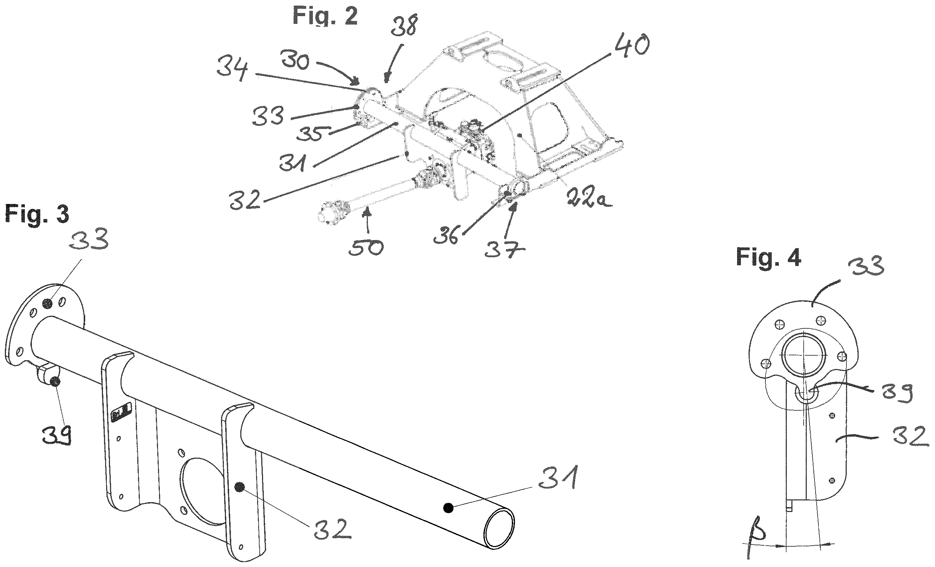

Der erfindungsgemäße Pumpenträger 30 ist in den vorderen Trommellagerbock 22a integriert. Figur 2 zeigt den vorderen Trommellagerbock mit dem Pumpenträger 30 sowie die daran befestigte Hydraulikpumpe 40.

Der Pumpenträger 30 hat die Aufgabe die Hydraulikpumpe 40, die zum Antrieb der Trommel 21 erforderlich ist, zu halten. Er besteht aus einem Rohr 31 und der daran aufgehängten Konsole 32 für die Pumpenbefestigung.

Die Lagerung des Profils 31 auf dem Trommellagerbock 22a erfolgt über ein Festlager 38 sowie ein Loslager 37. Im gezeigten Ausführungsbeispiel ist in Fahrtrichtung rechts das Festlager 38 vorgesehen und in Fahrtrichtung links ein Loslager 37. Es spricht jedoch nichts gegen eine vertauschte Anordnung der Lager 37, 38.

Das Festlager 38 wird durch die Flanschplatte 33 gebildet, die nach der ordnungsgemäßen Ausrichtung der Hydraulikpumpe 40 fest mit der Gegenplatte 25 des Trommelagerbockes 22a verschraubt wird. Das Loslager 37 besteht aus der U-förmigen Öffnung 27 des Trommellagerbockes 22a, in die das rohrförmige Profil 31 eingelegt werden kann. Auch dieses Lager 37 kann nach der Ausrichtung der Hydraulikpumpe 40 gesichert werden. Dazu sieht das Loslager 37 eine Befestigungsmöglichkeit 36 für einen Rundstahlbügel vor.

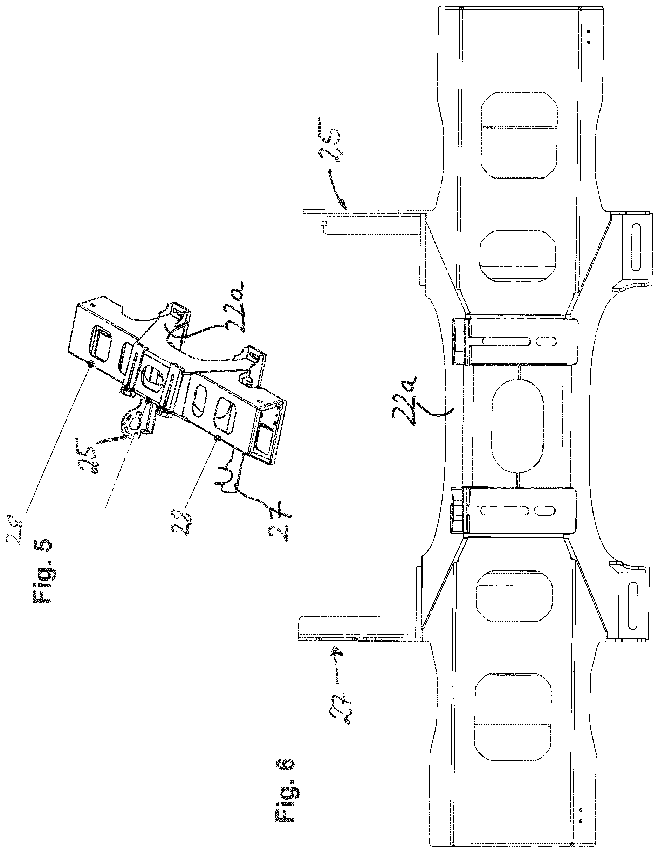

Die Flansch- und Gegenplatte 33, 25 (Fig. 3, Fig. 5) weisen ein Spannstiftloch 34 auf, was sinnvoller Weise erst nach dem Ausrichten der Pumpe 40 gebohrt wird. Soll die Pumpe 40 später demontiert und erneut eingebaut werden, kann das Spannstiftloch für eine provisorische Feststellung des Festlagers 38 genutzt werden. Hierzu wird ein Spannstift in das Loch 34 eingesetzt und die Verschraubung der Platten 33, 25 gelöst. Bei der späteren Montage kann das Profil 30 mitsamt der Hydraulikpumpe 40 ohne Aufwand in die bereits bekannte optimale Position verbracht werden, indem der Spannstift in die Bohrung 34 gesteckt wird.

Das eigentliche Ausrichten der Pumpe erfolgt mittels der Stellschraube 35, die im vorderen Trommellagerbock 22a integriert ist. Durch Verstellen der Schraube 35 kann der Montagewinkel β des Profils 31 eingestellt werden. Ein unterhalb des Flansches 33 herausragender Anschlag 39 wirkt mit der Stellschraube 35 zusammen, so dass das Profil 31 gegenüber dem Loslager 37 um den Winkel β verschwenkbar ist (Fig. 4). Der Druck der Stellschraube 35 auf den Anschlag kann das Profil 31 um Winkelbereiche bis zu 10°, idealerweise 5° feinjustieren.

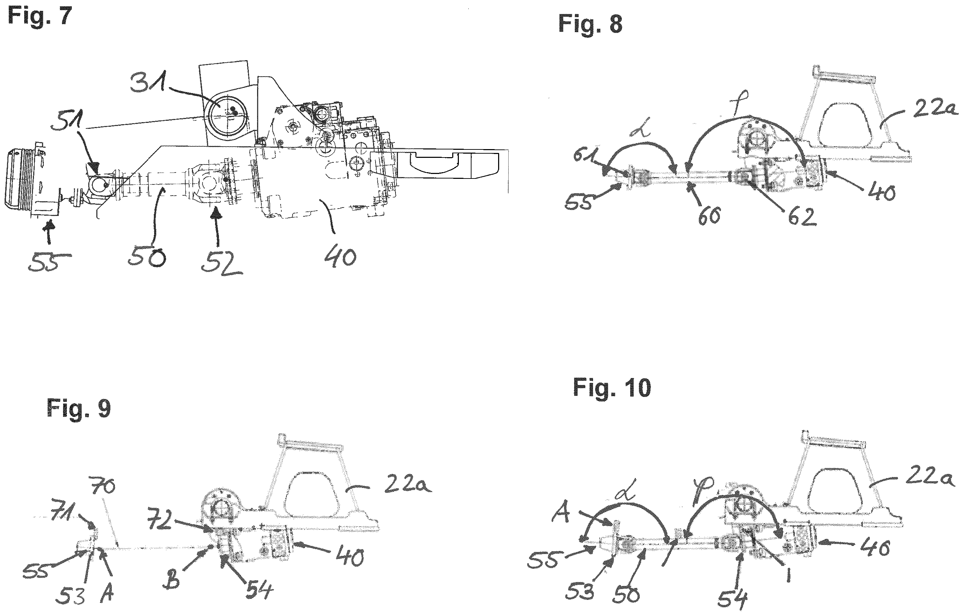

Der Anschluss der Hydraulikpumpe 40 an den Fahrmotor des Fahrmischers ist der Fig. 7 zu entnehmen. Die Hydraulikpumpe 40 des Fahrmischerantriebs wird über eine Gelenkwelle 50 mit einem Nebenabtrieb 55 des Fahrzeugmotors verbunden. Üblicherweise werden hierfür Kreuzgelenkwellen verwendet, da diese kostengünstig sind und größere Einbauwinkel erlauben, als z.B. Gleichlaufgelenkwellen. Dazu umfasst die Gelenkwelle 50 an beiden Enden jeweils ein Kreuzgelenk 51, 52. Wird ein einfaches Kreuzgelenk 51 in gebeugtem Zustand gleichförmig an der Antriebsseite gedreht, so ergibt sich an der Abtriebsseite eine ungleichförmige Bewegung. Diese Ungleichförmigkeit wird durch das zweite Kreuzgelenk 52 der Gelenkwelle 50 wieder ausgeglichen, sofern die Beugewinkel α, ϕ an beiden Gelenken 51, 52 gleich sind. Beim Einbau der Gelenkwelle 50 am Fahrmischer ist es deshalb sehr wichtig, dass die Gelenkwinkel α, ϕ gleich sind, da ansonsten durch die beschriebene Ungleichförmigkeit Drehschwingungen im Antriebsstrang auftreten.

Dazu muss das Profil 31 des Pumpenträgers 30 solange geschwenkt werden bis die Beugewinkel α, ϕ der Gelenkwelle 50 identisch sind. Das messen der Beugewinkel α, ϕ der Gelenkwelle 50 kann durch unterschiedliche Messverfahren, im Folgenden als Messgelenkwelle-Verfahren, optisches Messverfahren oder-Winkel- oder Neigungssensoren-Verfahren bezeichnet.

Das Messgelenkwellen-Verfahren ist in Fig. 8 gezeigt. Zwischen Nebenabtrieb 55 des LKW-Motors und Pumpe 40 wird zuerst eine Messwelle 60 eingesetzt. Diese ist ähnlich wie eine Gelenkwelle 50 aufgebaut. In den Gelenken 61, 62 der Messwelle 60 sind Sensoren installiert, die den jeweiligen Beugewinkel α, ϕ der Gelenke 61, 62 erfassen. Sind diese Winkel α, ϕ nicht identisch, muss solange an der Stellschraube 35 gedreht und dadurch der Pumpenträger 31 verschwenkt werden, bis beide Gelenkwinkel α, ϕ der Gelenke 61, 62 identisch sind.

Beim optischen Messverfahren, siehe Figur 9, wird ein Reflektor 71 am Flansch 53 des LKW-Nebenabtriebs 55 angebaut und am Flansch 54 der Hydraulikpumpe 40 eine Messoptik 72. Durch die Optik wir die Entfernung und Neigung zwischen Spiegel 71 und Messoptik 72 gemessen. Durch einen Berechnungsalgorithmus, der eine virtuelle Gelenkwelle 70 abbildet, wird der Beugungswinkel α, ϕ des Gelenks A und des Gelenks B berechnet und angezeigt. Der Pumpenträger 31 wird solange geschwenkt bis beide Beugewinkel α, ϕ der virtuellen Gelenkwelle 70 identisch sind. Bei diesem Verfahren muss keine Gelenkwelle 50, 60 eingebaut sein. Die kann zu einem späteren Arbeitsschritt erfolgen.

Beim Einstellverfahren mit Winkel- bzw. Neigungssensoren, siehe Figur 10, wird eine Gelenkwelle 50 zwischen Nebenabtrieb 55 und Pumpe 40 eingebaut. Es wird jeweils ein Sensor A am Flansch 53 der Gelenkwelle 50, ein Sensor B am Flansch 54 der Gelenkwelle 50 und auf dem Mittelstück des Rohrs der Gelenkwelle 50 ein Sensor C befestigt. Zur Ermittlung des Beugewinkels α der Gelenkwelle 50 wird die Differenz von Sensor A zu C berechnet und zur Ermittlung des Beugewinkels ϕ der Gelenkwelle 50 wird die Differenz von Sensor B zu C berechnet. Das Einstellen der Beugewinkel α, ϕ erfolgt durch Schwenken des Pumpenträgers 31 mittel Stellschraube 35. Der Pumpenträger 31 ist dabei solange zu schwenken bis der Beugewinkel α identisch zum Beugewinkel ϕ der Gelenkwelle 50 ist. Das Verfahren kann auch mit weniger Sensoren durchgeführt werden, dafür steigt die benötigte Zeit zum Ausrichten an.

Für alle Verfahren wird nach erfolgtem Einstellen der Beugewinkel α, ϕ der Pumpenträger 31 am Flansch 33 mittels Schrauben mit dem Trommellagerbock 22a verschraubt. Im Anschluss wird das Spannstiftloch 34 gebohrt und der Spannstift zwischen Pumpenträger 30 und Trommellagerbock 22a montiert. Der Spannstift dient zur Positionierung des Pumpenträgers 30 bei Demontage. Durch Setzen des Spannstiftes muss der Pumpenträger 31 nicht erneut ausgerichtet werden. Zudem ist er eine Redundanz zu der Verschraubung des Flansches 33 mit dem Trommellagerbock 22a. Im Anschluss wird der Pumpenträger 31 mit einem Rundstahlbügel auf der Loslagerseite 37 fixiert.

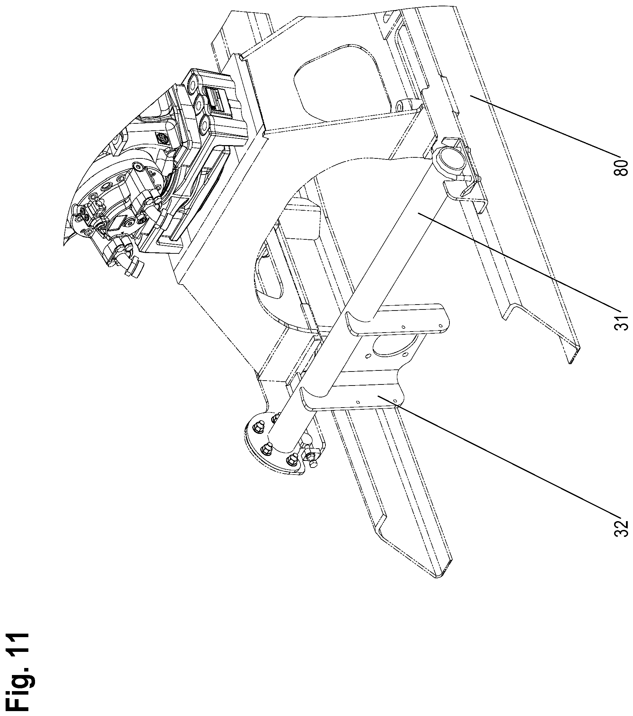

Figur 11 zeigt ein alternatives Ausführungsbeispiel des Pumpenträgers 30. Das Profil 31 wird hierbei nicht durch den Trommellagerbock aufgenommen sondern durch einen separaten Grundrahmen 80. Die sonstigen Merkmale entsprechen dem vorangegangenen Ausführungsbeispiel.

Mit Hilfe des erfindungsgemäßen Pumpenträgers 30 können Fahrzeugverwindungen kompensiert und Risse am Pumpenträger verhindert werden. Zudem wird durch die neuen Ausrichtverfahren eine Kombination aus W-Anordnung und seitliche Z-Anordnung möglich. Diese ermöglicht einen seitlichen Versatz zwischen Pumpe 40 und Nebenabtrieb 55 wenn dieser bauraumbedingt erforderlich ist. Die Vorteile der Erfindung lassen sich nochmals wie folgt zusammenfassen:
- Leichtes Einstellen des Beugungswinkels der Gelenkwelle über Stellschrauben
- Leichtere Demontage der Pumpeneinheit zur Reparatur durch Herausheben Pumpenträger mit Pumpe
- Im Reparaturfall ist nach dem Wiedereinsetzen die korrekte Gelenkwellenausrichtung durch die Positionsfixierung mittels Spannstift ohne erneutes Ausrichten gegeben.
- Bei wenig Bauraum seitlich zum LKW Rahmen seitlicher Versatz der Pumpe (W-Z Anordnung) realisierbar
- Keine zusätzlichen Anschweißteile (Halter) erforderlich.
- Keine nachträglichen Schweiß- oder Bohrarbeiten am Grundrahmen
- Keine zusätzlichen Lackierarbeiten am Grundrahmen
- Durch den Pumpeneinbau im Trommellagerbock können immer gleiche Schlauchlängen verwendet werden. Diese müssen auch nicht individuell montiert werden, sondern können vorkonfektioniert gekauft werden.
- Durch die Anordnung unter dem Trommellagerbock werden überwiegend längere Gelenkwellen als bisher verbaut, bei denen der Beugungswinkel leichter einstellbar ist.

## Patentansprüche

1. Pumpenträger (30) für wenigstens eine Hydraulikpumpe (40) zum Antrieb der Mischtrommel (21) eines Fahrmischers, wobei der Pumpenträger ein Profil (31) umfasst, dessen erstes Ende mittels lösbarem Festlager (38) an einem Grundrahmen (80) und dessen zweites Ende über ein Loslager (37) mit dem Grundrahmen befestigt ist, und wenigstens ein Stellmittel (35) vorgesehen ist, um das Profil gegenüber dem Grundrahmen bei gelöstem Festlager um das Loslager zu verschwenken.

2. Pumpenträger nach Anspruch 1, **dadurch gekennzeichnet, dass** das Profil ein Rohr ist, an dem über mindestens eine Konsole (32) die wenigstens eine Hydraulikpumpe anbaubar bzw. montiert ist.

3. Pumpenträger nach einem der vorhergehenden Ansprüche, **dadurch gekennzeichnet, dass** das Festlager eine Flanschplatte (33) umfasst, die mit dem Grundrahmen oder einer sonstigen Komponente des Fahrmischers verschraubbar ist.

4. Pumpenträger nach Anspruch 3, **dadurch gekennzeichnet, dass** die Flanschplatte mit einem Spannstiftloch (34) versehen ist, um zu Demontagezwecken den Pumpenträger mittels Spannstift provisorisch gegenüber dem Fahrmischer bzw. dem Grundrahmen zu fixieren.

5. Pumpenträger nach einem der vorhergehenden Ansprüche, **dadurch gekennzeichnet, dass** ein Rundstahlbügel zur Sicherung des Loslagers vorgesehen ist.

6. Fahrmischer mit einem Mischeraufbau und wenigstens einer Hydraulikpumpe zum Antrieb der Mischertrommel, wobei die Hydraulikpumpe mittels eines Pumpenträgers gemäß einem der vorhergehenden Ansprüche montiert ist.

7. Fahrmischer nach Anspruch 6, **dadurch gekennzeichnet dass** der Grundrahmen des Pumpenträgers ein Trommellagerbock (22) des Mischeraufbaus ist.

8. Verfahren zur Montage wenigstens einer Hydraulikpumpe an einem Fahrmischer, wobei die Hydraulikpumpe mittels Gelenkwelle an den Nebenabtrieb des Fahrmotors gekoppelt und die Gelenkwelle jeweils über ein Gelenk mit dem Nebenabtrieb und der Hydraulikpumpe verbunden werden sollen, **dadurch gekennzeichnet, dass** die Hydraulikpumpe an einem Pumpenträger gemäß einem der Ansprüche 1 bis 5 montiert wird und die Hydraulikpumpe vor der Fixierung des Festlagers über das Stellmittel ausgerichtet wird bis die Beugewinkel der verbauten Gelenke identisch sind.

9. Verfahren nach Anspruch 8, **dadurch gekennzeichnet, dass** die Ausrichtung der Hydraulikpumpe mit oder ohne verbauter Gelenkwelle (50) erfolgt.

10. Verfahren nach einem der Ansprüche 8 oder 9, **dadurch gekennzeichnet, dass** zunächst zwischen Nebenabtrieb und Hydraulikpumpe eine spezielle Messwelle (60) mit integrierten Sensoren zur Erfassung des Winkels zwischen den Gelenken eingesetzt wird, um die Hydraulikpumpe auszurichten und zu fixieren, wobei im Anschluss die Messwelle durch die Gelenkwelle ersetzt wird.

11. Verfahren nach einem der Ansprüche 8 oder 9, **dadurch gekennzeichnet**, das der Winkel zwischen den Gelenken per optischem oder akustischem Messverfahren bestimmt wird, wobei insbesondere eine Sende- und Empfangseinheit am Montageflansch der Pumpe oder am Flansch des Nebenabtriebs vorgesehen, und ein entsprechender Reflektor am gegenüberliegenden Flansch angeordnet ist.

12. Verfahren nach Anspruch 11, **dadurch gekennzeichnet, dass** die optische oder akustische Messung mittels Schall, Laser oder sonstiger Wellen erfolgt.

13. Verfahren nach Anspruch 8, **dadurch gekennzeichnet, dass** ein oder mehrere Winkel und/oder Neigungssensoren auf der Gelenkwelle angebaut werden, insbesondere jeweils ein Sensor im Bereich der Montageflansche der Gelenkwelle und wenigstens ein Sensor mittig im Bereich zwischen den Flanschen.

14. Verfahren nach Anspruch 13, **dadurch gekennzeichnet, dass** der Beugewinkel am Gelenk des Nebenabtriebs durch Vergleich der Messwerte des am Nebenabtriebsflansch befestigten und des mittig angeordneten Sensors ermittelt und der Beugewinkel am Gelenk der Hydraulikpumpe durch Messwertvergleich des am Flansch des pumpenseitigen Gelenks angeordneten und des mittig angeordneten Sensors bestimmt wird.

15. Verfahren nach einem der vorhergehenden Ansprüche 9 bis 14, **dadurch gekennzeichnet, dass** nach dem Ausrichten der Hydraulikpumpe das Festlager fixiert, das Spannstiftloch des Montageflansches des Festlagers gebohrt und das Loslager gesichert wird.

## Claims

1. A pump carrier (30) for at least one hydraulic pump (40) for driving the mixing drum (21) of a truck mixer, wherein the pump carrier comprises a section (31) whose first end is fastened to a base frame (80) by means of a releasable fixed bearing (38) and whose second end is fastened to the base frame via a loose bearing (37) and at least one adjustment means (35) is provided to pivot the section about the loose bearing with respect to the base frame with a released fixed bearing.

2. A pump carrier in accordance with claim 1, **characterized in that** the section is a pipe at which the at least one hydraulic pump can be attached or is installed via at least one console (32).

3. A pump carrier in accordance with one of the preceding claims, **characterized in that** the fixed bearing comprises a flange plate (33) that can be screwed to the base frame or to another component of the truck mixer.

4. A pump carrier in accordance with claim 3, **characterized in that** the flange plate is provided with a locking pin hole (34) to provisionally fix the pump carrier with respect to the truck mixer or the base frame by means of a locking pin for dismantling purposes.

5. A pump carrier in accordance with one of the preceding claims, **characterized in that** a round steel hoop is provided for securing the loose bearing.

6. A truck mixer having a mixer superstructure and at least one hydraulic pump for driving the mixer drum, wherein the hydraulic pump is installed by means of a pump carrier in accordance with one of the preceding claims.

7. A truck mixer in accordance with claim 6, **characterized in that** the base frame of the pump carrier is a drum support block (22) of the mixer superstructure.

8. A method of installing at least one hydraulic pump to a truck mixer, wherein the hydraulic pump should be coupled to the power takeoff of the propulsion motor via a universal shaft and the universal shaft should be respectively connected to the power takeoff and the hydraulic pump via a joint, **characterized in that** the hydraulic pump is installed at a pump carrier in accordance with one of the claims 1 to 5 and the hydraulic pump is aligned via the adjustment means before the fixing of the fixed bearing until the bend angles of the installed joints are identical.

9. A method in accordance with claim 8, **characterized in that** the alignment of the hydraulic pump takes place with or without an installed universal shaft (50).

10. A method in accordance with one of the claims 8 or 9, **characterized in that** a special measurement shaft (60) having integrated sensors for the detection of the angle between the joints is first inserted between the power takeoff and the hydraulic pump to align and fix the hydraulic pump, with the measurement shaft subsequently being replaced with the universal shaft.

11. A method in accordance with one of the claims 8 or 9, **characterized in that** the angle between the joints is determined by an optical or acoustic measuring method, with a transmission and reception unit in particular being provided at the installation flange of the pump or at the flange of the power takeoff and a corresponding reflector being arranged at the oppositely disposed flange.

12. A method in accordance with claim 11, **characterized in that** the optical or acoustic measurement takes place by means of sound, laser or other waves.

13. A method in accordance with claim 8, **characterized in that** one or more angle sensors and/or tilt sensors are attached to the universal shaft, in particular a respective sensor in the region of the installation flanges of the universal shaft and at least one sensor centrally in the region between the flanges.

14. A method in accordance with claim 13, **characterized in that** the bend angle at the joint of the power takeoff is determined by a comparison of the measured values of the sensor fastened to the power take off flange and of the sensor arranged centrally and the bend angle at the joint of the hydraulic pump is determined by a measured value comparison of the sensor arranged at the flange of the joint at the pump side and of the centrally arranged sensor.

15. A method in accordance with one of the preceding claims 9 to 14, **characterized in that**, after the alignment of the hydraulic pump, the fixed bearing is fixed, the locking pin hole of the installation flange of the fixed bearing is drilled and the loose bearing is secured.

## Revendications

1. Support de pompe (30) pour au moins une pompe hydraulique (40) destinée à entraîner le tambour mélangeur (21) d'une bétonnière portée, le support de pompe comprenant un profilé (31), dont la première extrémité est fixée à un cadre de base (80) au moyen d'un palier fixe (38) détachable et dont la seconde extrémité est fixée au cadre de base par le biais d'un palier libre (37), et au moins un moyen de réglage (35) étant prévu, pour pivoter le profilé sur le palier libre par rapport au cadre de base lorsque le palier fixe est détaché.

2. Support de pompe selon la revendication 1, **caractérisé en ce que** le profilé est un tube, sur lequel l'au moins une pompe hydraulique peut être ajoutée ou montée par le biais d'au moins une console (32).

3. Support de pompe selon l'une des revendications précédentes, **caractérisé en ce que** le palier fixe comprend une plaque formant bride (33), qui peut être vissée au cadre de base ou à un autre composant de la bétonneuse portée.

4. Support de pompe selon la revendication 3, **caractérisé en ce que** la plaque formant bride est pourvue d'un trou pour goupille de serrage (34), afin de fixer provisoirement le support de pompe par rapport à la bétonneuse portée ou au cadre de base au moyen d'une goupille de serrage à des fins de démontage.

5. Support de pompe selon l'une des revendications précédentes, **caractérisé en ce qu'**un étrier en acier rond est prévu pour fixer le palier libre.

6. Bétonneuse portée comprenant un équipement mélangeur et au moins une pompe hydraulique destinée à entraîner le tambour mélangeur, la pompe hydraulique étant montée au moyen d'un support de pompe selon l'une des revendications précédentes.

7. Bétonneuse portée selon la revendication 6, **caractérisée en ce que** le cadre de base du support de pompe est un support de palier de tambour (22) de l'équipement mélangeur.

8. Procédé de montage d'au moins une pompe hydraulique sur une bétonneuse portée, la pompe hydraulique devant être couplée à la prise de force du moteur de traction au moyen d'un arbre articulé et l'arbre articulé devant être raccordé respectivement par le biais d'un joint articulé à la prise de force et à la pompe hydraulique, **caractérisé en ce que** la pompe hydraulique est montée sur un support de pompe selon l'une des revendications 1 à 5 et la pompe hydraulique est ajustée par le biais du moyen de réglage avant la fixation du palier fixe jusqu'à ce que les angles d'articulation des joints articulés installés soient identiques.

9. Procédé selon la revendication 8, **caractérisé en ce que** l'ajustement de la pompe hydraulique est effectué avec ou sans arbre articulé (50) installé.

10. Procédé selon l'une des revendications 8 ou 9, **caractérisé en ce qu'**un arbre de mesure (60) spécial doté de capteurs intégrés pour détecter l'angle entre les joints articulés est d'abord inséré entre la prise de force et la pompe hydraulique pour ajuster et fixer la pompe hydraulique, l'arbre de mesure étant ensuite remplacé par l'arbre articulé.

11. Procédé selon l'une des revendications 8 ou 9, **caractérisé en ce que** l'angle entre les joints articulés est déterminé par procédé de mesure optique ou acoustique, une unité d'émission et de réception étant en particulier prévue sur la bride de montage de la pompe ou sur la bride de la prise de force, et un réflecteur correspondant étant disposé sur la bride opposée.

12. Procédé selon la revendication 11, **caractérisé en ce que** la mesure optique ou acoustique est effectuée au moyen du son, du laser ou d'autres ondes.

13. Procédé selon la revendication 8, **caractérisé en ce qu'**un ou plusieurs capteurs d'angle et/ou d'inclinaison sont montés sur l'arbre articulé, respectivement en particulier un capteur dans la zone de la bride de montage de l'arbre articulé et au moins un capteur au milieu dans la zone entre les brides.

14. Procédé selon la revendication 13, **caractérisé en ce que** l'angle d'articulation sur le joint articulé de la prise de force est déterminé par comparaison des valeurs de mesure du capteur fixé sur la bride de la prise de force et du capteur disposé au milieu et l'angle d'articulation sur le joint articulé de la pompe hydraulique est déterminé par comparaison de valeurs de mesure du capteur disposé sur la bride du joint articulé côté pompe et du capteur disposé au milieu.

15. Procédé selon l'une des revendications précédentes 9 à 14, **caractérisé en ce que**, après l'ajustement de la pompe hydraulique, le palier fixe est fixé, le trou pour goupille de serrage de la bride de montage du palier fixe est percé et le palier libre est fixé.
